Europäisches Patentamt

European Patent Office

Office européen des brevets

(11) Publication number: **0 265 279**
**A2**

## EUROPEAN PATENT APPLICATION

(21) Application number: **87309391.8**

(22) Date of filing: **23.10.87**

(51) Int. Cl.⁴: **H 02 K 23/54**

(30) Priority: **23.10.86 JP 250740/86**

(43) Date of publication of application:
**27.04.88 Bulletin 88/17**

(84) Designated Contracting States: **DE FR GB**

(71) Applicant: **NIHON RADIATOR CO., LTD.**
**24-15, 5-chome Minamidai**
**Nakano-ku Tokyo (JP)**

(72) Inventor: **Uchino, Setsuya**
**324-13 Narabuchi-cho**
**Sano-shi Tochigi-ken (JP)**

(74) Representative: **Rees, David Christopher et al**
**Kilburn & Strode 30 John Street**
**London WC1N 2DD (GB)**

(54) **Flat motor device, method and apparatus for producing the same.**

(57) A flat motor device (20) in which resin is moulded around a knurled portion (13) to a shaft (2) to form a rotor hub (4). The rotor hub (4) projects outwardly of a casing (1) and a shaft (2) projecting from the rotor hub (4) is formed with a small diameter threaded portion (11) so as to create an offset portion or shoulder (s) in the shaft (2). A fan (F) is directly mounted on the end surface of the rotor hub (4).

FIG.1

## Description

### FLAT MOTOR DEVICE, METHOD AND APPARATUS FOR PRODUCING THE SAME

The present invention relates to a flat motor, a method and apparatus for producing the same, the flat motor being suitable for driving a fan. Such flat motors include print motors, wire-wound type flat motors etc.

In flat motor devices used for blowers in radiator cooling apparatus for automobiles or for air conditioning apparatus for automobiles, a fan is mounted at the end of a shaft which projects from the motor (see, for example, Japanese Patent Application Laid-Open No.2,841/1987, Japanese Utility Model Application Laid-Open No.199,152/1986, Japanese Patent Application Laid-Open No.18,014/1972 and Japanese Patent Application Laid-Open No.32,099/1982).

In these motors, a closed casing is formed by first and second brackets which are formed from a plate like flat plate, a shaft is rotatably supported within the closed casing, and a rotor hub is mounted on the shaft through a sleeve. The rotor hub, which is made of a synthetic resin, has a rotor portion mounted thereon which has a commutator and an armature electrically connected to the commutator.

A feeder brush contacts the commutator, and a turning force is produced by interaction between a magnetic force provided through a slight clearance relative to the armature and an electric current flowing into the armature.

A flat portion cut off by a milling machine or the like is formed on the end of the aforesaid shaft, and a fan having a centre hole with the same shape as that of the flat portion and a fan plate are fitted into the flat portion. A nut is screwed onto the threaded end of the shaft and the fan and fan plate are held between the shoulder created by the flat portion and the nut.

In such cases, there are employed (A) a method in which the shaft is directly pressed into a centre hole of the rotor hub (see the aforesaid Japanese Patent Application Laid-Open No.18,014/1962) and (B) a method in which a sleeve is inserted through the centre of the rotor hub, and a shaft is inserted into the sleeve (see the aforesaid Japanese Patent Application Laid-Open No.2,841/1987).

If a flat motor device is produced without using such a sleeve as described in the former reference, the following inconveniences occur.

Firstly, if the rotor hub is directly resin-moulded on the shaft without using a sleeve, when the male die and the female die do not closely coincide at the time of resin moulding, corners or the like of the dies can touch the surface of the shaft which will have been finished with high precision, during spotting, possibly damaging the surface of the shaft.

Secondly, during the resin moulding, the resin flows along the surface of the shaft from the clearance between the dies, possibly making the resin adhere to unnecessary portions.

Thirdly, during pressing, cracks in the rotor hub made of the resin may occur.

In the case of the rotor portion having a sleeve provided between the shaft and rotor hub as described in the later reference above, the shaft needs to be formed with a knurled portion having an outside diameter larger than the inside diameter of the sleeve so as to provide a positive engagement between the sleeve and the shaft. With this arrangement, the sleeve is, when pressed in, expanded radially outwards by the knurled portion, and the rotor hub which is made of resin at the outer periphery of the sleeve may crack due to the expansion.

In order to prevent the occurrence of such cracks, one proposal is for the engaging portion between the sleeve and the knurled portion to be axially externally of the rotor hub. However, this increases the axial dimension of the flat motor device and materially impairs the properties of the flat motor.

Moreover the use of such a sleeve results in an increase in the number of parts, which is naturally disadvantageous in view of the cost.

Furthermore, if a flat portion for mounting the fan is formed on the end of the shaft using a milling machine or the like, the cost increases in terms of machining, and in addition, it involves an inconvenience in that the axial dimension of the motor itself increases due to the presence of the flat portion.

It is an object of the present invention to minimise or overcome the above described disadvantages and problems.

According to the present invention, there is provided a flat motor device including a casing formed from first and second brackets in the form of flat plates whose outer peripheral portions are closely united; a magnet mounted within the casing; a shaft supported by a bearing portion located in a hole in the casing; a rotor hub mounted on a knurled portion of the shaft and projecting outwards from the casing; a flat rotor portion having an armature and a commutator mounted on the rotor hub, the flat rotor portion being located between the magnet and the second bracket with a minimum clearance characterised in that a threaded portion having a smaller diameter than the shaft is formed on the end of the shaft so as to project from the end of the rotor hub, and a boss portion of a fan is located on the end of the shaft and comes into contact with a shoulder between the shaft body and the threaded portion, the fan being held in position by a nut on the threaded portion, the rotor hub being moulded directly on to the knurled portion of the shaft.

In this manner, the rotor hub projects outside the casing, and the offset portion of the shaft and the end surface of the rotor hub may be utilised to mount the fan directly. Therefore, a small axial dimension for the flat motor device may be obtained. Furthermore, the threaded portion, having a smaller diameter than that of the shaft, is formed on the end of the shaft, and in the case of the resin moulding, the offset portion or shoulder created on the shaft within the mould may be used to check any flow of resin. Therefore, the rotor hub made of resin and the shaft can be connected without the use of a sleeve, to provide a positive connection between the shaft and the rotor hub.

Preferably, the armature and the commutator are integrally formed to form the rotor portion. Preferably, the first bracket has an inner peripheral portion bent inwardly to form a centre hole for the bearing, and the second bracket has an inner peripheral portion curled outwardly to form a centre hole for the bearing.

Preferably, the rotor hub is formed with radiating through holes, preferably, the rotor hub has a projection which extends from an end surface thereof, into a hole in the boss portion of the fan.

The invention also extends to a method for producing a flat motor device as described above which comprises inserting a body portion of a shaft into a hole in a female die, inserting a threaded portion of the shaft into a recess in a male die to support the shaft and to bring a shoulder between the threaded portion and the body portion of the shaft into contact with the lower surface of the male die, and pouring resin into a cavity formed between the die parts, the shaft having a knurled portion in the region of the cavity, so that the resin forms a rotor hub around the knurled portion of the shaft.

Preferably, a sealing member is positioned at the outer periphery of the die cavity to seal the contact surfaces of the male and female dies. Preferably the flat rotor portion of the motor device is held between a sealing member in each of the two discs and projects into the die cavity. Preferably, the shaft is resiliently supported by means of a resilient member fitted into the hole in the female die.

The invention also extends to an apparatus for producing a flat motor device characterised in that a seal member for sealing between contact surfaces of the male die and the female die is positioned in the outer periphery of the cavity and provided in either or both of the male die and female die.

Thus, the present invention may provide an inexpensive flat motor device in which a rotor hub is directly resin moulded on to a shaft to form a rotor portion, and a fan is directly mounted on the end surface of a rotor hub giving a small axial dimension, simplifying the producing operation, and reducing the number of parts.

Furthermore, the present invention may provide a method of producing the aforesaid flat motor device, which enables positive resin mould moulding without the use of sleeve.

The present invention may also provide apparatus for the manufacture method which can prevent resins from flowing into unnecessary portions during resin moulding.

The invention may be carried into practice in various ways and one embodiment will now be described by way of example with reference to the accompanying drawings, in which:

Figure 1 is a section through a motor in accordance with the present invention;

Figure 2 is a section on line II-II in Figure 1; and

Figure 3 is a schematic sectional view showing a stage in the assembly of the motor.

The flat motor device 20 is constituted by mounting a fan F on a motor M. The motor M has a closed casing 1 formed by a first bracket 1a and a second bracket 1b each formed from a plate-like flat plate. A shaft 2 is rotatably supported within the closed casing 1, and a rotor hub 4 is mounted on the shaft 2. The rotor hub 4 is made of synthetic resin, and has mounted on it a rotor portion R having a commutator 5 and an armature 6 electrically connected to the commutator 5 (in the illustrated embodiment, a print motor is used in order to make the whole body flat, and the commutator 5 and the armature 6 are formed integrally).

A feeder burst 7 touches on the commutator 5, and a turning force is produced by the interaction between the magnetic force of a magnet 8 provided through a slight clearance G relative to the armature 6 and an electric current flowing into the armature 6.

The flat plate-like first bracket 1a has the magnet 8 secured to it by an adhesive or the like, and a bearing portion 22 is provided in a centre hole 21 thereof. This bearing portion 22 consists of a pair of bearings 24 provided within a bearing housing 23 to rotatably support the shaft 2.

The central part of the bearing portion 22 is supported by a bended portion 25 formed by inwardly bending the peripheral edge which forms the centre hole 0a of the first bracket 1a. Thus, the amount by which the shaft 2 projects from the casing is made small.

The centre hole 0a is sealed by a cap 26 to prevent the entry of rain water or the like from the outside.

The shaft 2 has at its other end a knurled portion 13 to which the rotor hub 4 is directly mould-mounted, that is, without a sleeve as used in some previously mentioned designs.

During this moulding process, the flat rotor portion R comprising the integral armature 6 and commutator 5 is located at the same time, the rotor portion R being positioned at the rear end close to the magnet 8 of the rotor hub 4. This rotor portion R is positioned opposite the magnet 8 with the clearance G as small as possible.

The second bracket 1b is provided in proximity to the rotor portion R and extends, as a yoke which receives magnetic lines of force from the magnet 8, to the neighbourhood of the rotor hub 4. The peripheral edge portion forming the centre hole 0b of the second bracket 1b is curled outwardly into a curled portion 27. This curled portion 27 prevents water drops entering through the second bracket 1b from entering the casing 1.

When the second bracket 1b is provided in the form of a yoke in proximity to the armature 6, a major portion of the rotor hub 4 is exposed to the outside of the casing 1, and so the motor M becomes considerably flat.

In the present embodiment, a threaded portion 11 formed on the end of the shaft 2 is formed so as to have a smaller diameter d than the diameter D of other parts of the shaft 2 in order to create a shoulder (s) between the threaded portion 11 and the other portion of the shaft and at the same time a recess having a smaller diameter than the diameter d is formed between the threaded portion 11 and the shoulder s.

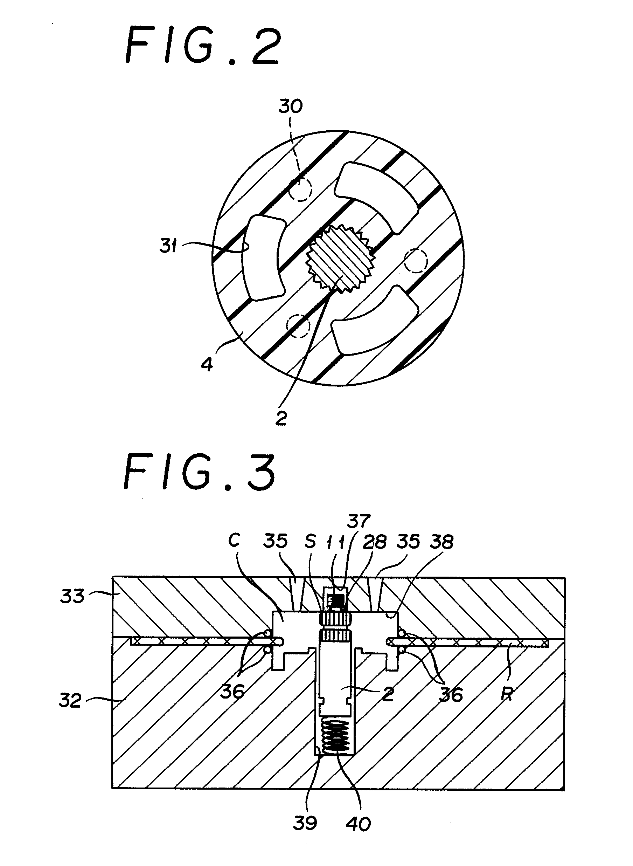

Thus, in the case where in the manufacture of a flat motor, the shaft 2 is set within a metal mould and resins are poured for moulding, the threaded portion 11 is located in a recess 37 in a male die 33 which is brought into contact with the shoulder offset portions s, and the shaft body portion 2a is supported within a hole 39 in a female die 32 as shown in Figure 3. The shaft 2 may be positively supported, and will then receive no damage from the mould. When the resin is poured as will be described later, the resin will not flow into the threaded portion 11 due to the contact between the shoulder s and the male die 33, and no possible adherence of resin to unnecessary portions occurs. The shaft 2 and the rotor hub 4 can therefore be positively resin-moulded without the use of a sleeve. If the resin flows in through the gap between the male die 33 and the shoulder s, an unnecessary adherence of resin to the threaded portion 11 is avoided by the presence of the recess 28 having a smaller diameter than a diameter d.

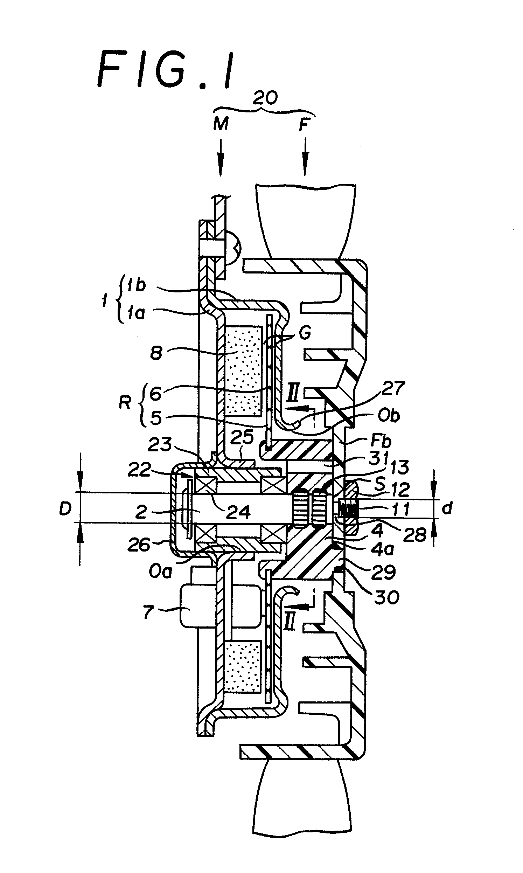

Referring again to Figure 1, the end surface 4a of the resin-made rotor hub 4 which projects out from the casing 1 is smoothly finished, though a projection 29 projects from the end surface 4a. This projection 29 mates with with a through-hole 30 in a fan boss portion Fb and the two are fastened by means of a nut 12, so that the fan F is mounted on the shaft 2. The boss portion Fb of the fan F is therefore directly mounted on the rotor hub 4, and the aforementioned flat portion of earlier constructions may be removed, whereby the axial dimension of the flat motor device 20 can be reduced, and transmission of torque from the motor to the fan may be carried out effectively.

The rotor hub 4 has a plurality of radiating through-holes 31 as shown in Figure 2. In this flat motor device 20, mechanical frictional heat is generated in the bearing portion 22 and electrical resistance or Joule heat is generated in the armature 6. Therefore, the interior of the casing 1 tends to be full of heat. However, due to the through-holes 31, this heat is promptly transmitted to the fan boss portion Fb, through which the heat is emitted to the outside.

In order to manufacture the rotor portion R, firstly, the shaft 2 is inserted and stood upright in the hole 39 within the female die 32 as shown in Figure 3. In this case, if a spring 40 is disposed within the hole 39 of the female die, the shock is relieved when the shaft 2 is inserted.

Secondly, the female die 33 is moved downwards and the threaded portion 11 is fitted into the recess 37 of the male die 33. The corner portion of the inner peripheral edge of the recess 37 of the male die (the lower surface 38 of the male die 33) is brought into contact with the shoulder s between the threaded portion 11 and the shaft body portion 2a, and so the cavity C is formed around the knurled portion 13. Thus, the shaft 2 is retained stabley and damage to the shaft 2 is avoided.

In particular, since the corner portion of the inner peripheral edge of the recess 37 of the male die 33 is brought into contact with the shoulder s formed at a position close to the threaded portion 11, even when resins are poured through resin pouring openings 35,35, unnecessary resin will not adhere to the threaded portion 11. Accordingly the resin poured into the cavity C is positively mounted around the knurled portion 13.

In Figure 3, reference numeral 36 designates 0 rings provided in the opposed surfaces of the male and female dies 32, 33 of a position towards the outer periphery of the cavity C. The O rings 30 form a seal on each side of the armature 6 thus allowing the poured resin to pass between the male and female die surfaces but preventing it from flowing onto the surface of the armature 6.

The flat motor device 20 formed as described above eliminates the need of a flat portion on the shaft, a fan plate, a sleeve, a washer, and the like as has been necessary in prior art motors. In addition, the rotor hub 4 projects outside the housing 1 and the fan F is directly mounted on the rotor hub 4. Therefore, the flat motor device according to the present invention is materially shorter axially as compared with conventional flat motor devices. The number of parts and the cost is therefore reduced.

Moreover, since the shoulder s is formed between the body portion 2a of the shaft 2 and the threaded portion 11, when the rotor hub 4 is resin-moulded, the moulding can be positively carried out without use of a sleeve.

## Claims

1. A flat motor device (20) including a casing (1) formed form first and second brackets (1a,1b) in the from of flat plates whose outer peripheral portions are closely united; a magnet (8) mounted within the casing; a shaft (2) supported by a bearing portion (22) located in a hole (21) in the casing; a rotor hub (4) mounted on a knurled portion (13) of the shaft and projecting outwards from the casing; a flat rotor portion (R) having an armature (5) and a commutator (6) mounted on the rotor hub (4), the flat rotor portion being located between the magnet (8) and the second bracket (16) with a minimum clearance (G) characterised in that a threaded portion (11) having a smaller diameter than the shaft (2) is formed on the end of the shaft so as to project from the end of the rotor hub (4), and a boss portion (Fb) of a fan (F) is located on the end of the shaft (2) and comes into contact with a shoulder (S) between the shaft body and the threaded portion (11), the fan (F) being held in position by a nut (12) on the threaded portion (11), the rotor hub (4) being moulded directly on to the knurled portion (13) of the shaft (2).

2. A flat motor device as claimed in Claim 1, characterised in that the armature (6) and the commutator (5) are integrally formed to form the rotor portion (12).

3. A flat motor device as claimed in Claim 1 or Claim 2 characterised in that the first bracket (1a) has an inner peripheral portion bent inwardly to form a centre hole (21) for the bearing (22).

4. A flat motor device as claimed in any of Claims 1 to 3 characterised in that the second bracket (1b) has an inner peripheral portion curled outwardly to form a centre hole (21) for the bearing (22).

5. A flat motor device as claimed in any of Claims 1 to 4 characterised in that the rotor hub 4 is formed with radiating through-holes (31).

6. A flat motor device as claimed in any of Claims 1 to 5 characterised in that the rotor hub (4) has a projection (29) which extends from an end surface thereof, into a hole (30) in the boss portion (Fb) of the fan (F).

7. A method for producing a flat motor device characterised by inserting a body portion of a shaft (2) into a hole (39) in a female die (32), inserting a threaded portion (11) of the shaft (2) into a recess (37) in a male die (33) to support the shaft (2) and to bring a shoulder (S) between the threaded portion (11) and the body portion of the shaft (2) into contact with the lower surface of the male die (33), and pouring resin into a cavity (C) formed between the die parts, the shaft having a knurled portion (13) in the region of the cavity, so that the resin forms a rotor hub (4) around the knurled portion of the shaft.

8. A method as claimed in Claim 7 characterised in that a sealing member (36) is positioned at the outer periphery of the die cavity (C) to seal the contact surfaces of the male and female dies (32,33).

9. A method as claimed in Claim 7 or Claim 8 characterised in that the flat rotor portion (R) of the motor device is held between a sealing member (36) in each of the two dies (32,33) and projects into the die cavity (C).

10. A method as claimed in any of Claims 7 to 9 characterised in that the shaft (2) is resiliently supported by means of a resilient member (40) fitted into the hole (39) in the female die (32).

0265279

# FIG. 1

0265279

# FIG.2

# FIG.3